# FASCICULE DE BREVET EUROPEEN

(11) **EP 1 735 135 B1**
(45) Date de publication et mention de la délivrance du brevet: **18.07.2007**
(21) Numéro de dépôt: 05732867.6
(22) Date de dépôt: 02.03.2005
(51) Int. Cl.: B29C 45/16, B65D 19/38

(54) **DISPOSITIF DE MANUTENTION ANTIDERAPANT**
VORRICHTUNG ZUR RUTSCHSICHEREN HANDHABUNG
ANTISKID HANDLING DEVICE

(30) Priorité: 23.03.2004 FR 0402984
(43) Date de publication de la demande: 27.12.2006
(73) Titulaire: Allibert Equipement, 92000 Nanterre (FR)
(72) Inventeur: LI, Weidong, 78480 Verneuil sur Seine (FR); GILETTI, Matthieu, 76520 Franqueville Saint Pierre (FR)
(74) Mandataire: Arnaud, Jean
(86) Numéro de dépôt international: PCT/FR2005/000497
(87) Numéro de publication internationale: WO 2005/102653

(56) Documents cités:
- EP-A- 0 407 097
- GB-A- 1 330 876
- GB-A- 2 228 891
- US-A- 5 453 236
- US-A1- 2003 041 956

## Description

Pour le stockage, la manutention, le transport d'objets, il est connu d'utiliser des palettes, des boites et des bacs. Les palettes peuvent être en bois et les boites et les bacs en carton. Il est ainsi possible d'empiler des palettes vides ou des cartons sur des palettes. Il est encore possible de transporter des palettes à l'aide d'un engin de manutention à fourches et de les stocker sur des racks métalliques horizontaux.

Cette solution est satisfaisante du point de vue de la stabilité des charges transportées. Le coefficient de frottement entre la palette et les cartons est suffisant pour que, lors de la manutention, notamment par un chariot élévateur les cartons ne glissent pas sur le plateau de la palette.

Cependant la durée de vie d'une palette est limitée à quelques dizaines d'utilisations et celui d'un carton à une seule.

De plus le bois ne peut être utilisé pour tout type d'application, par exemple dans les industries alimentaires.

Le carton présente aussi des limites, notamment pour la manutention de charges lourdes ou humides.

Il est aussi connu d'utiliser des bacs et des palettes en matière plastique, telle que du polyéthylène haute densité (PEHD). Cette solution présente de nombreux avantages.

Ils sont rigides, résistants, hygiéniques, imputrescibles, insensibles aux différences d'hygrométrie et peuvent par conséquent être réutilisés un très grand nombre de fois par rapport à des produits similaires en bois ou en carton.

Cependant, la matière plastique utilisée pour ce type de produit présente un coefficient de frottement inférieur à celui du bois ou du carton. Cela peut poser des problèmes. Notamment lorsqu'un bac est stocké sur une palette, il est nécessaire de prévoir des moyens de retenu tels que des rebords ou des ergots de maintien, si non le bac risque de glisser lors de la manipulation de la palette. Un problème similaire de glissement peut apparaître lors de la manutention par un engin à fourches, du stockage sur rack ou du gerbage d'une palette sur une autre.

De façon à résoudre ces problèmes il est connu de réaliser des zones antidérapantes sur la face supérieure du plateau de la palette.

Il est connu de former des aspérités permettant notamment l'accrochage de boites en cartons ou des bossages permettant le calage des bacs. Des telles solutions ne sont pas optimales, car par exemple une palette comportant des aspérités ne pourra pas être utilisée pour recevoir des bacs en plastique, au risque d'augmenter encore le glissement. Les calages sont adaptés pour des conteneurs ayant des dimensions déterminées, ce qui contraint l'utilisateur d'utiliser un type de bac avec un type de palette déterminé et limite la polyvalence des produits.

Il est aussi possible de rapporter ou de surmouler un élément présentant un coefficient de frottement supérieur à celui du matériau constitutif du plateau.

Le document GB 1330876 A décrit un dispositif de manutention selon le préambule de la revendication 1.

Cependant des telles solutions ne sont pas satisfaisantes. L'élément antidérapant peut se désolidariser de la palette, de plus le temps de fabrication ainsi que le coût de l'outillage sont augmentés.

De façon à fournir une solution à ces problèmes, l'invention propose un dispositif de manutention en matière plastique, comportant au moins une partie de contact constituée d'une zone externe de contact antidérapante et d'une zone rigide, caractérisé en ce que la partie de contact est réalisée en une seule matière plastique composite qui est constituée par le mélange d'au moins un composant antidérapant ayant une viscosité V1 à la température d'injection et un composant rigide, compatible physico-chimiquement avec le composant antidérapant, ayant une viscosité V2 à la température d'injection, et en ce que la viscosité V1 est inférieure à la viscosité V2 de façon à ce que la zone externe antidérapante comporte une concentration en composant antidérapant, plus importante que la zone rigide.

Ainsi le dispositif de manutention présente une rigidité et une résistance proches de celles du matériau rigide tout en ayant une zone externe antidérapante permettant de limiter le glissement entre le dispositif de manutention et l'élément qu'il reçoit ou celui qui le supporte.

Selon d'autres caractéristiques de l'invention :
- le composant souple est un élastomère thermoplastique ;
- le composant rigide est du polyéthylène ;
- la matière plastique comporte au moins un composant additionnel de renfort tel que du talc ou des fibres.

L'invention propose aussi une palette de manutention du type décrit précédemment; caractérisée en ce que la partie de contact est le plateau supérieur.

Selon d'autres caractéristiques de l'invention :
- la partie de contact est une semelle.

L'invention propose aussi un bac de manutention du type décrit précédemment, caractérisé en ce que la partie de contact est la paroi de fond d'un bac de manutention.

L'invention propose encore un chariot mobile du type décrit précédemment, caractérisé en ce que la partie de contact est le plateau supérieur.

D'autres caractéristiques et avantages de l'invention apparaîtront à la lecture de la description détaillée qui suit pour la compréhension de laquelle on se reportera aux dessins annexés parmi lesquels :
- la figure 1 est une vue schématique en perspective d'une palette de manutention réalisée selon l'invention ;
- la figure 2 est une vue en coupe selon le plan vertical passant par la ligne 2-2 représentée à la figure précédente du plateau supérieur d'une palette de manutention;
- la figure 2a est une vue en coupe et en détail du plateau supérieur d'une palette de manutention représentée à la figure précédente;

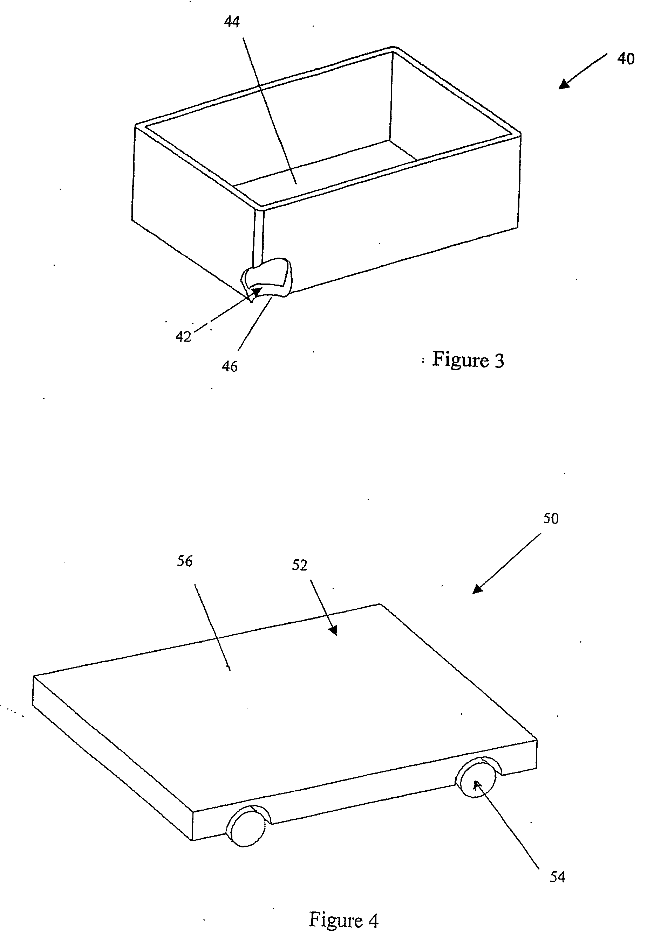

- la figure 3 est une vue schématique en perspective d'un bac de manutention réalisé selon l'invention;
- la figure 4 est une vue schématique en perspective d'un chariot mobile réalisé selon l'invention.

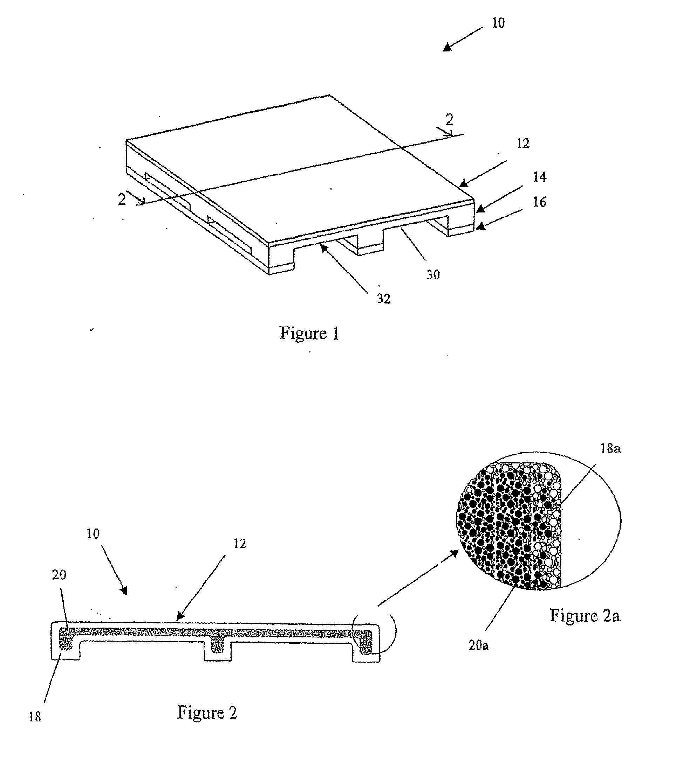

La figure 1 représente une palette de manutention 10 réalisée par injection de matière plastique dans un moule.

La palette 10 est constituée d'un plateau supérieur 12 d'un corps intermédiaire 14 et de semelles 16.

Ces trois éléments peuvent être réalisés en trois parties distinctes, ces parties étant alors assemblées entre elles, conformément à la figure 1, par un procédé connu tel que le soudage au miroir. Ils peuvent aussi être réalisés en une seule pièce de façon former une palette monobloc.

Le plateau supérieur 12 est destiné à recevoir une charge telle que des bacs de manutention (non représentés).

La palette 10 comporte au moins une partie de contact qui, à titre d'exemple, est le plateau supérieur 12.

La partie de contact est constituée d'une zone externe de contact antidérapante 18 et d'une zone rigide 20.

Selon l'invention la partie de contact est réalisée en une seule matière plastique composite qui est constituée par le mélange d'au moins un composant antidérapant (représenté de façon schématique par des cercles blancs 18a sur les figures 2 et 2a) ayant une viscosité V1 à la température d'injection et un composant rigide antidérapant (représenté de façon schématique par des disques noirs 20 a sur les figures 2 et 2a), compatible physico-chimiquement avec le composant antidérapant, ayant une viscosité V2 à la température d'injection. La viscosité V1 est inférieure à la viscosité V2 de façon à ce que la zone externe antidérapante comporte une concentration en composant antidérapant, plus importante que la zone rigide.

A titre d'exemple non limitatif on choisit V2 sensiblement égale à 7 V1.

Lors du remplissage du moule par la matière, la viscosité V1 du composant antidérapant étant inférieure à la viscosité V2 du composant rigide, le composant antidérapant va se retrouver préférentiellement contre les parois du moule puis va se solidifier.

Conformément aux figures 2 et 2a, la concentration du composant antidérapant est donc plus élevée à proximité de la paroi du moule c'est à dire de la zone externe antidérapante 18. Le composant rigide se situe en majorité au coeur du plateau 12, conformément à la figure 2.

L'invention permet ainsi de réaliser un dispositif de manutention présentant une zone antidérapante robuste et efficace, sans modification des outillages de moulage et augmentation du temps de cycle d'injection.

Les deux composants antidérapant et rigide sont compatibles physico-chimiquement ce qui leur permet une bonne cohésion. La zone antidérapante et la zone rigide sont ainsi intimement liées supprimant le risque de séparation de deux zones.

Selon une variante, non représentée, la partie de contact est limitée à un secteur du plateau supérieur 12.

Pour ce faire le plateau est injecté dans un moule au moyen de plusieurs injecteurs, certains étant alimentés par la matière plastique composite, d'autres par une matière plastique classique, telle que du PEHD, qui est compatible chimiquement avec la matière composite.

Pour limiter la partie de contact il est aussi possible de contrôler la température de certaines zones du moule. En effet, le composant antidérapant ayant une viscosité V1 inférieure à la viscosité V2 du composant rigide, il est possible en créant des zones du moule plus froides que d'autres, d'augmenter la concentration du composant antidérapant à proximité de ces zones.

A titre d'exemple, les zones antidérapantes 18 peuvent alors avoir une forme circulaire ou oblongue.

De telles solutions permettent d'optimiser la consommation de matière composite et d'adapter les performances antidérapantes aux besoins définis par l'utilisateur de la palette.

Pour augmenter la résistance et la rigidité du dispositif de manutention, l'invention propose que la matière plastique comporte au moins un composant additionnel de renfort. A titre d'exemple non limitatif le composant additionnel est du talc ou des fibres de verres.

Pour augmenter encore la rigidité de la palette il est envisageable de la renforcer, de façon connue par des éléments de renfort, tels que des tubes métalliques qui sont insérés dans le plateau supérieur.

Le composant rigide peut faire partie de la famille des polyoléfine, il est avantageusement du polyéthylène, notamment du PEHD.

Le composant antidérapant présente un coefficient de frottement supérieur à celui du composant rigide. Il fait avantageusement partie de la famille des élastomères thermoplastiques et est compatible physico-chimiquement avec le composant rigide.

A titre d'exemple le composant rigide et le composant antidérapant sont sélectionnés de façon que le rapport entre leur module de flexion est de 100. Ainsi le module de flexion du composant rigide peut être de l'ordre de 1000 à 1200 MPa et celui du composant antidérapant de l'ordre de 10 à 12 MPa.

La partie de contact peut aussi être une semelle 16 de la palette de manutention 10. Ainsi lorsque cette dernière est posée sur un support, tel qu'une autre palette ou des racks de stockage, sa stabilité est fortement améliorée.

Une partie de contact peut encore être située sous le plateau inférieur 30 du corps intermédiaire 14 au niveau des passages de fourches 32. Lorsque la palette est déplacée sur les fourches d'un chariot élévateur la présence de la zone externe antidérapante permet de limiter le glissement de la palette. Les accélérations et la vitesse de déplacement du chariot peuvent être plus élevées, ce qui permet d'optimiser le temps et le coût de manutention des palettes.

Le dispositif de manutention peut aussi être un bac de manutention 40, le contact est alors avantageusement la paroi de fond 42. Ainsi les faces supérieure 44 et inférieure 46 de la paroi de fond présentent des caractéristiques antidérapantes.

Les objets stockés sur la face supérieure 44 du bac 40 sont plus stables et les chocs avec les parois latérales sont limités.

L'augmentation de l'adhérence de la face inférieure 46 permet de stabiliser le bac lorsqu'il est posé sur un support, tel qu'une palette, une table mais aussi un convoyeur. Dans ce cas la partie de contact permet de faciliter le guidage du bac et d'augmenter la vitesse de convoyage.

De façon similaire aux palettes, il est possible de limiter la partie de contact à un secteur, en fonction de l'utilisation du bac.

Pour une utilisation sur convoyeur, il faut que l'adhérence de la face inférieure 46 soit la plus importante possible. La zone externe antidérapante de la partie de contact est avantageusement limitée à la face inférieure et notamment aux zones en contact avec les dispositifs d'entraînement du convoyeur. Cela est obtenu par exemple, par une différence de température entre la paroi du moule qui est en contact avec la face inférieure 46 et la paroi du moule en contact avec la face supérieure 44.

Le dispositif de manutention peut encore être un chariot mobile 50 constitué d'un plateau supérieur 52 et de roues 54. La partie de contact est alors avantageusement la face supérieure 56 du plateau 52 du chariot. Cela permet de stabiliser la charge transportée.

## Revendications

1. Dispositif de manutention (10) en matière plastique, comportant au moins une partie de contact constituée d'une zone externe de contact antidérapante (18) et d'une zone rigide (20), la partie de contact est réalisée en une seule matière plastique composite qui est constituée par le mélange d'au moins un composant antidérapant (18a) ayant une viscosité V1 à la température d'injection et un composant rigide (20a), compatible physico-chimiquement avec le composant antidérapant (18a), ayant une viscosité V2 à la température d'injection **caractérisé en ce que** la viscosité V1 est inférieure à la viscosité V2 de façon à ce que la zone externe antidérapante (18) comporte une concentration en composant antidérapant, plus importante que la zone rigide (20).

2. Dispositif de manutention (10) selon la revendication 1, **caractérisé en ce que** le composant antidérapant (18a) est un élastomère thermoplastique.

3. Dispositif de manutention (10) selon l'une des revendications 1 ou 2, **caractérisé en ce que** le composant rigide (20a) est du polyéthylène.

4. Dispositif de manutention (10) selon l'une quelconque des revendications précédentes, **caractérisé en ce que** la matière plastique comporte au moins un composant additionnel de renfort tel que du talc ou des fibres.

5. Palette de manutention (10) selon l'une quelconque des revendications précédentes, **caractérisée en ce que** la partie de contact est le plateau supérieur (12).

6. Palette de manutention (10) selon l'une quelconque des revendications précédentes, **caractérisée en ce que** la partie de contact est une semelle (16).

7. Bac de manutention (40) selon l'une quelconque des revendications 1 à 4, **caractérisé en ce que** la partie de contact est la paroi de fond (42).

8. Chariot mobile (50) selon l'une quelconque des revendications 1 à 4, **caractérisé en ce que** la partie de contact est le plateau supérieur (52).

## Claims

1. Handling device (10) of plastics material, comprising at least one contact portion which is constituted by an anti-skid outer contact zone (18) and a rigid zone (20), wherein the contact portion is produced from a single composite plastics material which is constituted by the mixture of at least one anti-skid component (18a) having a viscosity V1 at the injection temperature and a rigid component (20a) which is physico-chemically compatible with the anti-skid component (18a) and which has a viscosity V2 at the injection temperature, **characterised in that** the viscosity V1 is lower than the viscosity V2 so that the anti-skid outer zone (18) comprises a higher concentration of anti-skid component than the rigid zone (20).

2. Handling device (10) according to claim 1, **characterised in that** the anti-skid component (18a) is a thermoplastic elastomer.

3. Handling device (10) according to either claim 1 or claim 2, **characterised in that** the rigid component (20a) is of polyethylene.

4. Handling device (10) according to any one of the preceding claims, **characterised in that** the plastics material comprises at least one additional reinforcement component, such as talcum or fibres.

5. Handling pallet (10) according to any one of the preceding claims, **characterised in that** the contact portion is the upper plate (12).

6. Handling pallet (10) according to any one of the preceding claims, **characterised in that** the contact portion is a base plate (16).

7. Handling container (40) according to any one of claims 1 to 4, **characterised in that** the contact portion is the base wall (42).

8. Movable carriage (50) according to any one of claims 1 to 4, **characterised in that** the contact portion is the upper plate (52).

## Patentansprüche

1. Handhabungsvorrichtung (10) aus Kunststoff, die mindestens einen Kontaktabschnitt aufweist, der aus einem rutschsicheren äußeren Kontaktbereich (18) und einem starren Bereich (20) besteht, wobei der Kontaktabschnitt aus einem einzigen Kunststoff-Verbundwerkstoff hergestellt ist, der aus dem Gemisch mindestens eines rutschsicheren Bestandteils (18a), der bei der Verarbeitungstemperatur eine Viskosität V1 aufweist, mit einem starren Bestandteil (20a) besteht, der in physikalisch-chemischer Hinsicht mit dem rutschsicheren Bestandteil (18a) kompatibel ist und bei der Verarbeitungstemperatur eine Viskosität V2 aufweist, **dadurch gekennzeichnet, dass** die Viskosität V1 geringer als die Viskosität V2 ist, damit der äußere rutschsichere Bereich (18) einen höheren Gehalt an dem rutschsicheren Bestandteil aufweist als der starre Bereich (20).

2. Handhabungsvorrichtung (10) nach Anspruch 1, **dadurch gekennzeichnet, dass** der rutschsichere Bestandteil (18a) ein thermoplastisches Elastomer ist.

3. Handhabungsvorrichtung (10) nach einem der Ansprüche 1 oder 2, **dadurch gekennzeichnet, dass** der starre Bestandteil (20a) Polyethylen ist.

4. Handhabungsvorrichtung (10) nach einem der vorhergehenden Ansprüche, **dadurch gekennzeichnet, dass** der Kunststoff mindestens einen zusätzlichen verstärkenden Bestandteil wie Talk oder Fasern aufweist.

5. Handhabungspalette (10) nach einem der vorhergehenden Ansprüche, **dadurch gekennzeichnet, dass** der Kontaktabschnitt die obere Fläche (12) ist.

6. Handhabungspalette (10) nach einem der vorhergehenden Ansprüche, **dadurch gekennzeichnet, dass** der Kontaktabschnitt eine Bodenplatte (16) ist.

7. Handhabungsbehälter (40) nach einem der Ansprüche 1 bis 4, **dadurch gekennzeichnet, dass** der Kontaktabschnitt die Rückwand (42) ist.

8. Bewegliches Gestell (50) nach einem der Ansprüche 1 bis 4, **dadurch gekennzeichnet, dass** der Kontaktabschnitt die obere Fläche (52) ist.
